# EUROPEAN PATENT APPLICATION

(11) **EP 4 675 098 A1**
(43) Date of publication of application: **07.01.2026**
(21) Application number: 23925430.3
(22) Date of filing: 21.12.2023
(51) Int. Cl.: F02D 23/00, F02B 37/00, F02B 37/007

(54) **ENGINE SYSTEM**

(30) Priority: 28.02.2023 JP 2023029212
(71) Applicant: KAWASAKI JUKOGYO KABUSHIKI KAISHA, Kobe-shi, Hyogo 650-8670 (JP)
(72) Inventor: HORIE, Takashi, Hyogo, 650-8670 (JP); MAEDA, Yoshito, Hyogo, 650-8670 (JP); KONDO, Yuta, Hyogo, 650-8670 (JP); SAKAMOTO, Tomohiro, Hyogo, 650-8670 (JP); KONNO, Kaiki, Hyogo, 650-8670 (JP); NAKAYAMA, Kyotaro, Hyogo, 650-8670 (JP); HIRAYAMA, Towa, Hyogo, 650-8670 (JP)
(74) Representative: Dehns
(86) International application number: PCT/JP2023/045930
(87) International publication number: WO 2024/180880

(57) **Abstract**

An engine system (1) according to one embodiment includes an engine (2), a main turbocharger (3), and an EGR turbocharger (5). The engine system (1) further includes a first parallel intake path (41), a second parallel intake path (61), a main intake path (21), a main exhaust path (22), a first parallel exhaust path (43), a second parallel exhaust path (63), an EGR path (71), a first jet assist path (81), and a second jet assist path (83). The engine system (1) further includes a controller (9) that controls a first intake shutoff valve (42), a second intake shutoff valve (62), a first exhaust shutoff valve (44), a second exhaust shutoff valve (64), a first blowoff valve (46), a second blowoff valve (66), an EGR blower (73), an EGR shutoff valve (72, 74), a first jet assist valve (82), and a second jet assist valve (84).

## Description

### Technical Field

The present disclosure relates to an engine system including a reciprocating engine and turbochargers.

### Background Art

Conventionally, an engine system including a reciprocating engine and turbochargers is known. For example, Patent Literature 1 discloses an engine system in which a main turbocharger and an auxiliary turbocharger are connected in parallel to a reciprocating engine.

More specifically, in the engine system of Patent Literature 1, a main intake path is connected to the reciprocating engine, a first compressor of the main turbocharger is connected to the main intake path by a first parallel intake path, and a second compressor of the auxiliary turbocharger is connected to the main intake path by a second parallel intake path. In addition, a blowoff path branches from the second parallel intake path, and a blowoff valve is located in the blowoff path. Furthermore, a first turbine of the main turbocharger is connected to the reciprocating engine by a first exhaust path, and a second turbine of the auxiliary turbocharger is connected to the reciprocating engine by a second exhaust path. An intake shutoff valve is located in the second parallel intake path and downstream of a point at which the blowoff path branches, and an exhaust shutoff valve is located in the second exhaust path.

In the engine system of Patent Literature 1, when both the main turbocharger and the auxiliary turbocharger are in use, the auxiliary turbocharger may be stopped by closing the intake shutoff valve and the exhaust shutoff valve. In that situation, the blowoff valve is opened or closed depending on the discharge pressure of the second compressor.

### Citation List

### Patent Literature

PTL 1: WO 2015/162840 A1

### Summary of Invention

### Technical Problem

In the case where turbochargers are installed in an engine system that can effect EGR (Exhaust Gas Recirculation), it is conceivable to switch between the turbochargers depending on whether EGR is enabled or not. That is, the turbochargers include a main turbocharger used in an EGR-disabled mode and an EGR turbocharger used in an EGR-enabled mode. This makes it possible to select turbochargers with which an optimal turbocharger efficiency in each mode can be achieved. In contrast, the engine system of Patent Literature 1 cannot switch between the turbochargers.

It is therefore an object of the present disclosure to provide an engine system that can switch between turbochargers depending on whether EGR is enabled or not.

### Solution to Problem

The present disclosure provides an engine system including: a reciprocating engine to which a main intake path and a main exhaust path are connected; an EGR blower and at least one EGR shutoff valve that are located in an EGR path connecting the main intake path to the main exhaust path; a main turbocharger including a first compressor connected to the main intake path by a first parallel intake path and a first turbine connected to the main exhaust path by a first parallel exhaust path; an EGR turbocharger including a second compressor connected to the main intake path by a second parallel intake path and a second turbine connected to the main exhaust path by a second parallel exhaust path; a first intake shutoff valve and a first exhaust shutoff valve that are located in the first parallel intake path and the first parallel exhaust path, respectively; a second intake shutoff valve and a second exhaust shutoff valve that are located in the second parallel intake path and the second parallel exhaust path, respectively; a first blowoff valve located in a first blowoff path branching from the first parallel intake path at a point upstream of the first intake shutoff valve; a second blowoff valve located in a second blowoff path branching from the second parallel intake path at a point upstream of the second intake shutoff valve; a first jet assist valve located in a first jet assist path that guides jet assist air to the first compressor; a second jet assist valve located in a second jet assist path that guides jet assist air to the second compressor; and a controller that controls the EGR blower, the at least one EGR shutoff valve, the first intake shutoff valve, the first exhaust shutoff valve, the second intake shutoff valve, the second exhaust shutoff valve, the first blowoff valve, the second blowoff valve, the first jet assist valve, and the second jet assist valve.

### Advantageous Effects of Invention

The present disclosure provides an engine system that can switch between turbochargers depending on whether EGR is enabled or not.

### Brief Description of Drawings

FIG. 1 is a schematic configuration diagram of an engine system according to one embodiment.
FIG. 2 is a timing chart of switching from an EGR-enabled mode to an EGR-disabled mode.
FIG. 3 is a timing chart of switching from the EGR-disabled mode to the EGR-enabled mode.

### Description of Embodiments

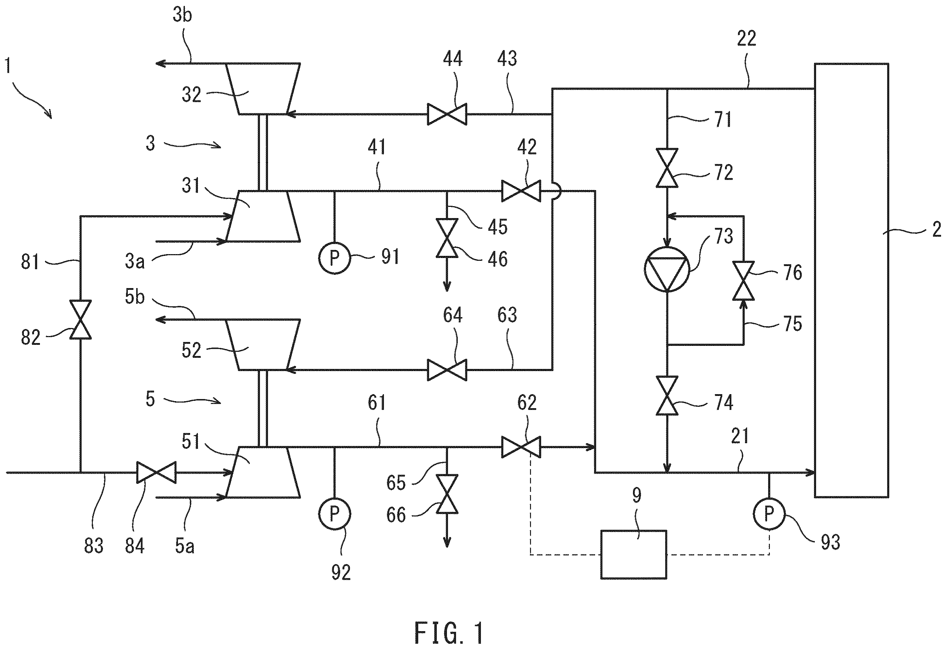

FIG. 1 shows an engine system 1 according to one embodiment. The engine system 1 includes a reciprocating engine 2, a main turbocharger 3, an EGR turbocharger 5, and a controller 9. The engine system 1 is switchable between enabling and disabling of EGR.

The switching between enabling and disabling of EGR may be done by an operator or automatic operation. For example, in the case where the engine system 1 is mounted on a ship, EGR is enabled in an area such as a harbor where NOₓ emissions should be reduced. Alternatively, the engine system 1 may be integrated in an onshore power generation facility. In this case, if the reciprocating engine 2 is a dual fuel engine that uses two types of fuels, EGR is enabled at the time of switching between the fuels in order to achieve optimal combustion.

The reciprocating engine 2 includes a crankshaft and cylinders arranged in one or two lines in the axial direction of the crankshaft. The reciprocating engine 2 may be a two-stroke engine or a four-stroke engine. The combustion cycle in the reciprocating engine 2 may be an Otto cycle or a diesel cycle.

A main intake path 21 and a main exhaust path 22 are connected to the reciprocating engine 2. For example, the main intake path 21 includes an intake manifold extending in the axial direction of the crankshaft and branch paths connecting the intake manifold to the cylinders. Likewise, the main exhaust path 22 includes an exhaust manifold extending in the axial direction of the crankshaft and branch paths connecting the exhaust manifold to the cylinders.

The main turbocharger 3 is used in an EGR-disabled mode, and the EGR turbocharger 5 is used in an EGR-enabled mode. The main turbocharger 3 includes a first compressor 31 and a first turbine 32, and the EGR turbocharger 5 includes a second compressor 51 and a second turbine 52.

The first compressor 31 is connected to the main intake path 21 by a first parallel intake path 41, and the second compressor 51 is connected to the main intake path 21 by a second parallel intake path 61. The first turbine 32 is connected to the main exhaust path 22 by a first parallel exhaust path 43, and the second turbine 52 is connected to the main exhaust path 22 by a second parallel exhaust path 63.

A first intake shutoff valve 42 and a second intake shutoff valve 62 are located in the first parallel intake path 41 and the second parallel intake path 61, respectively. A first exhaust shutoff valve 44 and a second exhaust shutoff valve 64 are located in the first parallel exhaust path 43 and the second parallel exhaust path 63, respectively.

Air is supplied to the first compressor 31 through an inflow path 3a, and exhaust gas is discharged from the first turbine 32 through an outflow path 3b. Likewise, air is supplied to the second compressor 51 through an inflow path 5a, and exhaust gas is discharged from the second turbine 52 through an outflow path 5b.

Furthermore, a first blowoff path 45 branches from the first parallel intake path 41 at a point upstream of the first intake shutoff valve 42. The distal end of the first blowoff path 45 is open to the atmosphere. A first blowoff valve 46 is located in the first blowoff path 45.

Likewise, a second blowoff path 65 branches from the second parallel intake path 61 at a point upstream of the second intake shutoff valve 62. The distal end of the second blowoff path 65 is open to the atmosphere. A second blowoff valve 66 is located in the second blowoff path 65.

A first jet assist path 81 is also connected to the first compressor 31. The first jet assist path 81 guides jet assist air from a tank retaining compressed air to the first compressor 31. A first jet assist valve 82 is located in the first jet assist path 81.

Likewise, a second jet assist path 83 is also connected to the second compressor 51. The second jet assist path 83 guides jet assist air from the tank retaining compressed air to the second compressor 51. A second jet assist valve 84 is located in the second jet assist path 83.

The main intake and exhaust paths 21 and 22 described above are connected to each other by an EGR path 71. In the EGR path 71, there is an EGR blower 73, and EGR shutoff valves 72 and 74 are located, respectively, upstream and downstream of the EGR blower 73. Either one of the EGR shutoff valves 72 and 74 may be omitted.

An EGR return path 75 is connected to the EGR path 71 to guide exhaust gas from a point downstream of the EGR blower 73 to a point upstream of the EGR blower 73. An EGR return valve 76 is located in the EGR return path 75.

The controller 9 controls the first intake shutoff valve 42, the second intake shutoff valve 62, the first exhaust shutoff valve 44, the second exhaust shutoff valve 64, the first blowoff valve 46, the second blowoff valve 66, the first jet assist valve 82, the second jet assist valve 84, the EGR blower 73, the EGR shutoff valves 72 and 74, and the EGR return valve 76. In FIG. 1, some of the signal lines are omitted for the sake of simplicity of the figure.

As regards the controller 9, the functionality of the elements disclosed herein may be implemented using circuitry or processing circuitry which includes general purpose processors, special purpose processors, integrated circuits, ASICs (Application Specific Integrated Circuits), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known hardware which is programmed or configured to carry out the recited functionality. When the hardware is a processor which may be considered a type of circuitry, the circuitry, means, or units are a combination of hardware and software, the software being used to configure the hardware and/or processor.

The following describes the control performed by the controller 9. In the present embodiment, the controller 9 is electrically connected to pressure sensors 91, 92, and 93. The pressure sensor 91 is located in the first parallel intake path 41 and detects the outlet pressure of the first compressor 31. The pressure sensor 92 is located in the second parallel intake path 61 and detects the outlet pressure of the second compressor 51. The pressure sensor 93 is located in the main intake path 21 and detects the supply pressure to the reciprocating engine 2.

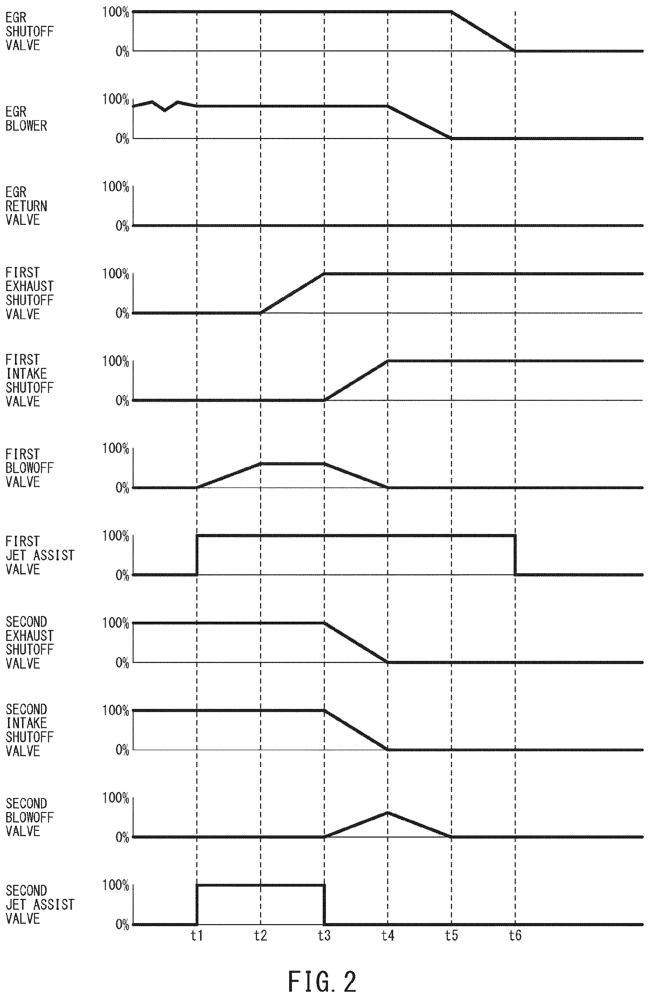

First, switching from the EGR-enabled mode to the EGR-disabled mode will be described with reference to FIG. 2. In the EGR-enabled mode, the first intake shutoff valve 42, the first exhaust shutoff valve 44, the first blowoff valve 46, the second blowoff valve 66, the first jet assist valve 82, the second jet assist valve 84, and the EGR return valve 76 are closed, and the second intake shutoff valve 62, the second exhaust shutoff valve 64, and the EGR shutoff valves 72 and 74 are opened. In the EGR-disabled mode, the first intake shutoff valve 42 and the first exhaust shutoff valve 44 are opened, and the first blowoff valve 46, the second intake shutoff valve 62, the second exhaust shutoff valve 64, the second blowoff valve 66, the EGR shutoff valves 72 and 74, the EGR return valve 76, the first jet assist valve 82, and the second jet assist valve 84 are closed.

Upon receiving a turbocharger switching command to switch from the EGR turbocharger 5 to the main turbocharger 3 (time point t1), the controller 9 opens the first jet assist valve 82 and the second jet assist valve 84, and then opens the first blowoff valve 46 to a given opening degree. Since the opening of the second jet assist valve 84 increases the rotational speed of the EGR turbocharger 5, the controller 9 opens the first exhaust shutoff valve 44 after the rotational speed of the EGR turbocharger 5 has become stable (time point t2). For example, once a given time has elapsed from the time point t1, the controller 9 may determine that the rotational speed of the EGR turbocharger 5 has become stable.

Next, once a switching requirement has been met (time point t3), the controller 9 closes the second jet assist valve 84. In the present embodiment, the switching requirement is that the outlet pressure of the first compressor 31 as detected by the pressure sensor 91 should be higher than the supply pressure to the reciprocating engine 2 as detected by the pressure sensor 93.

After that, the controller 9 closes the second intake shutoff valve 62 and the second exhaust shutoff valve 64 and opens the second blowoff valve 66 to a given opening degree while closing the first blowoff valve 46 and opening the first intake shutoff valve 42. The controller 9 slows down the EGR blower 73 once the first intake shutoff valve 42 has been fully opened (time point t4), and closes the second blowoff valve 66 once the second intake shutoff valve 62 has been fully closed. The controller 9 closes the EGR shutoff valves 72 and 74 after the EGR blower 73 has been stopped (time point t5), and closes the first jet assist valve 82 once the EGR shutoff valves 72 and 74 have been fully closed (time point t6).

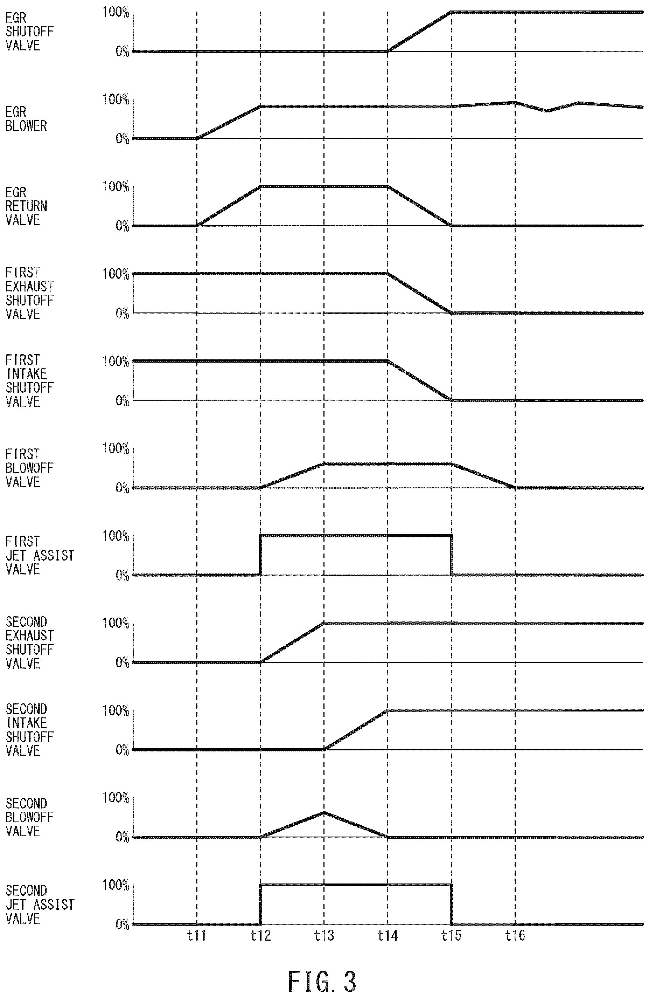

The following describes switching from the EGR-disabled mode to the EGR-enabled mode with reference to FIG. 3.

Upon receiving a turbocharger switching command to switch from the main turbocharger 3 to the EGR turbocharger 5 (time point t11), the controller 9 activates the EGR blower 73 and opens the EGR return valve 76. Once the rotational speed of the EGR blower 73 has reached a target rotational speed (time point t12), the controller 9 opens the first jet assist valve 82 and the second jet assist valve 84. After that, the controller 9 opens the second exhaust shutoff valve 64 and opens the first blowoff valve 46 and the second blowoff valve 66 to a given opening degree.

Next, once a switching requirement has been met (time point t13), the controller 9 closes the second blowoff valve 66 while opening the second intake shutoff valve 62. In the present embodiment, the switching requirement is that the outlet pressure of the second compressor 51 as detected by the pressure sensor 92 should be higher than the supply pressure to the reciprocating engine 2 as detected by the pressure sensor 93.

After that, once the second intake shutoff valve 62 has been fully opened (time point t14), the controller 9 closes the EGR return valve 76, the first intake shutoff valve 42, and the first exhaust shutoff valve 44 while opening the EGR shutoff valves 72 and 74. Once the EGR shutoff valves 72 and 74 have been fully opened (time point t15), the controller 9 closes the first jet assist valve 82 and the second jet assist valve 84, and then closes the first blowoff valve 46. After the first blowoff valve 46 has been fully closed (time point t16), the controller 9 controls the EGR blower 73, for example, based on the intake air oxygen concentration in a portion of the main intake path 21 that is downstream of a point where the EGR path 71 joins the main intake path 21.

As described above, in the engine system 1 of the present embodiment, it is possible in the EGR-disabled mode to stop the EGR turbocharger 5 and activate the main turbocharger 3 by opening the first intake shutoff valve 42 and the first exhaust shutoff valve 44 and closing the second intake shutoff valve 62 and the second exhaust shutoff valve 64. In the EGR-enabled mode, it is possible to stop the main turbocharger 3 and activate the EGR turbocharger 5 by closing the first intake shutoff valve 42 and the first exhaust shutoff valve 44 and opening the second intake shutoff valve 62 and the second exhaust shutoff valve 64. That is, switching between the turbochargers can be done depending on whether EGR is enabled or not. Thus, the main turbocharger 3 can be selected to achieve an optimal turbocharger efficiency in the EGR-disabled mode, and the EGR turbocharger 5 can be selected to achieve an optimal turbocharger efficiency in the EGR-enabled mode. Furthermore, control of the first blowoff valve 46, the second blowoff valve 66, the first jet assist valve 82, and the second jet assist valve 84 by the controller 9 can prevent surging (phenomenon in which intake air flows back in a turbocharger) during switching between the turbochargers.

In particular, in the present embodiment, the control as shown in FIG. 2 can prevent surging in the main turbocharger 3 during switching from the EGR-enabled mode to the EGR-disabled mode, and the control as shown in FIG. 3 can prevent surging in the EGR turbocharger 5 during switching from the EGR-disabled mode to the EGR-enabled mode.

### <Modifications>

The present disclosure is not limited to the embodiment described above, and various modifications can be made without departing from the gist of the present disclosure.

For example, the EGR turbocharger 5 may consist of serially-connected turbochargers.

### <Summary>

In a first aspect, the present disclosure provides an engine system including: a reciprocating engine to which a main intake path and a main exhaust path are connected; an EGR blower and at least one EGR shutoff valve that are located in an EGR path connecting the main intake path to the main exhaust path; a main turbocharger including a first compressor connected to the main intake path by a first parallel intake path and a first turbine connected to the main exhaust path by a first parallel exhaust path; an EGR turbocharger including a second compressor connected to the main intake path by a second parallel intake path and a second turbine connected to the main exhaust path by a second parallel exhaust path; a first intake shutoff valve and a first exhaust shutoff valve that are located in the first parallel intake path and the first parallel exhaust path, respectively; a second intake shutoff valve and a second exhaust shutoff valve that are located in the second parallel intake path and the second parallel exhaust path, respectively; a first blowoff valve located in a first blowoff path branching from the first parallel intake path at a point upstream of the first intake shutoff valve; a second blowoff valve located in a second blowoff path branching from the second parallel intake path at a point upstream of the second intake shutoff valve; a first jet assist valve located in a first jet assist path that guides jet assist air to the first compressor; a second jet assist valve located in a second jet assist path that guides jet assist air to the second compressor; and a controller that controls the EGR blower, the at least one EGR shutoff valve, the first intake shutoff valve, the first exhaust shutoff valve, the second intake shutoff valve, the second exhaust shutoff valve, the first blowoff valve, the second blowoff valve, the first jet assist valve, and the second jet assist valve.

In the above configuration, it is possible in an EGR-disabled mode to stop the EGR turbocharger and activate the main turbocharger by opening the first intake shutoff valve and the first exhaust shutoff valve and closing the second intake shutoff valve and the second exhaust shutoff valve. In an EGR-enabled mode, it is possible to stop the main turbocharger and activate the EGR turbocharger by closing the first intake shutoff valve and the first exhaust shutoff valve and opening the second intake shutoff valve and the second exhaust shutoff valve. That is, switching between the turbochargers can be done depending on whether EGR is enabled or not. Thus, the main turbocharger can be selected to achieve an optimal turbocharger efficiency in the EGR-disabled mode, and the EGR turbocharger can be selected to achieve an optimal turbocharger efficiency in the EGR-enabled mode. Furthermore, control of the first blowoff valve, the second blowoff valve, the first jet assist valve, and the second jet assist valve by the controller can prevent surging during switching between the turbochargers.

In a second aspect according to the first aspect, in switching to an EGR-disabled mode from an EGR-enabled mode where the first intake shutoff valve, the first exhaust shutoff valve, the first blowoff valve, the second blowoff valve, the first jet assist valve, and the second jet assist valve are closed and where the second intake shutoff valve, the second exhaust shutoff valve, and the at least one EGR shutoff valve are opened, the controller may firstly open the first jet assist valve and the second jet assist valve, and then open the first blowoff valve and the first exhaust shutoff valve, secondly close the second jet assist valve, and then close the second intake shutoff valve and the second exhaust shutoff valve and open the second blowoff valve while closing the first blowoff valve and opening the first intake shutoff valve, thirdly stop the EGR blower, and fourthly close the at least one EGR shutoff valve and the first jet assist valve. Thus, surging in the main turbocharger can be prevented during switching from the EGR-enabled mode to the EGR-disabled mode.

In a third aspect according to the first or second aspect, the engine system may further include an EGR return valve located in an EGR return path that guides exhaust gas from a point downstream of the EGR blower to a point upstream of the EGR blower, the EGR return valve being controlled by the controller, and in switching to an EGR-enabled mode from an EGR-disabled mode where the first intake shutoff valve and the first exhaust shutoff valve are opened and where the second intake shutoff valve, the second exhaust shutoff valve, the at least one EGR shutoff valve, the EGR return valve, the first blowoff valve, the second blowoff valve, the first jet assist valve, and the second jet assist valve are closed, the controller may firstly activate the EGR blower and open the EGR return valve, secondly open the first jet assist valve and the second jet assist valve, and then open the first blowoff valve, the second exhaust shutoff valve, and the second blowoff valve, thirdly close the second blowoff valve while opening the second intake shutoff valve, fourthly close the EGR return valve, the first intake shutoff valve, and the first exhaust shutoff valve while opening the at least one EGR shutoff valve, and fifthly close the first jet assist valve and the second jet assist valve, and then close the first blowoff valve. In this configuration, surging in the EGR turbocharger can be prevented during switching from the EGR-disabled mode to the EGR-enabled mode.

## Claims

1. An engine system comprising:
a reciprocating engine to which a main intake path and a main exhaust path are connected;
an EGR blower and at least one EGR shutoff valve that are located in an EGR path connecting the main intake path to the main exhaust path;
a main turbocharger including a first compressor connected to the main intake path by a first parallel intake path and a first turbine connected to the main exhaust path by a first parallel exhaust path;
an EGR turbocharger including a second compressor connected to the main intake path by a second parallel intake path and a second turbine connected to the main exhaust path by a second parallel exhaust path;
a first intake shutoff valve and a first exhaust shutoff valve that are located in the first parallel intake path and the first parallel exhaust path, respectively;
a second intake shutoff valve and a second exhaust shutoff valve that are located in the second parallel intake path and the second parallel exhaust path, respectively;
a first blowoff valve located in a first blowoff path branching from the first parallel intake path at a point upstream of the first intake shutoff valve;
a second blowoff valve located in a second blowoff path branching from the second parallel intake path at a point upstream of the second intake shutoff valve;
a first jet assist valve located in a first jet assist path that guides jet assist air to the first compressor;
a second jet assist valve located in a second jet assist path that guides jet assist air to the second compressor; and
a controller that controls the EGR blower, the at least one EGR shutoff valve, the first intake shutoff valve, the first exhaust shutoff valve, the second intake shutoff valve, the second exhaust shutoff valve, the first blowoff valve, the second blowoff valve, the first jet assist valve, and the second jet assist valve.

2. The engine system according to claim 1, wherein
in switching to an EGR-disabled mode from an EGR-enabled mode where the first intake shutoff valve, the first exhaust shutoff valve, the first blowoff valve, the second blowoff valve, the first jet assist valve, and the second jet assist valve are closed and where the second intake shutoff valve, the second exhaust shutoff valve, and the at least one EGR shutoff valve are opened,
the controller
firstly opens the first jet assist valve and the second jet assist valve, and then opens the first blowoff valve and the first exhaust shutoff valve,
secondly closes the second jet assist valve, and then closes the second intake shutoff valve and the second exhaust shutoff valve and opens the second blowoff valve while closing the first blowoff valve and opening the first intake shutoff valve,
thirdly stops the EGR blower, and
fourthly closes the at least one EGR shutoff valve and the first jet assist valve.

3. The engine system according to claim 1 or 2, further comprising an EGR return valve located in an EGR return path that guides exhaust gas from a point downstream of the EGR blower to a point upstream of the EGR blower, the EGR return valve being controlled by the controller, wherein
in switching to an EGR-enabled mode from an EGR-disabled mode where the first intake shutoff valve and the first exhaust shutoff valve are opened and where the second intake shutoff valve, the second exhaust shutoff valve, the at least one EGR shutoff valve, the EGR return valve, the first blowoff valve, the second blowoff valve, the first jet assist valve, and the second jet assist valve are closed,
the controller
firstly activates the EGR blower and opens the EGR return valve,
secondly opens the first jet assist valve and the second jet assist valve, and then opens the first blowoff valve, the second exhaust shutoff valve, and the second blowoff valve,
thirdly closes the second blowoff valve while opening the second intake shutoff valve,
fourthly closes the EGR return valve, the first intake shutoff valve, and the first exhaust shutoff valve while opening the at least one EGR shutoff valve, and
fifthly closes the first jet assist valve and the second jet assist valve, and then closes the first blowoff valve.
